Europäisches Patentamt

European Patent Office

Office européen des brevets

(19)

(11) Publication number: **0 271 844**
**A2**

(12) # EUROPEAN PATENT APPLICATION

(21) Application number: **87118417.2**

(51) Int. Cl.⁴: **F16H 55/08**

(22) Date of filing: **11.12.87**

(30) Priority: **17.12.86 PL 263105**

(43) Date of publication of application:
**22.06.88 Bulletin 88/25**

(84) Designated Contracting States:
**DE GB IT**

(71) Applicant: **Politechnika Rzeszowska im.**
**Ignacego Lukasiewicza**
**ul. W. Pola 2**
**35-959 Rzeszow(PL)**

Applicant: **Wojewodzki Klub Techniki i**
**Racjonalizacji Zaklad Uslug Technicznych w**
**Rzeszowie**
**ul. Kopernika 1**
**35-959 Rzeszow(PL)**

(72) Inventor: **Buczek, Jan**
**ul.Piastow 7/77**
**PL-35-077 Rzeszow(PL)**
Inventor: **Warzybok, Tadeusz**

**36-042 Lubenia 48(PL)**
Inventor: **Buczek, Witoslaw**
**ul. Solarza 21/59**
**PL-35-111 Rzeszow(PL)**

(74) Representative: **Finck, Dieter et al**
**Patentanwälte v. Füner, Ebbinghaus, Finck**
**Mariahilfplatz 2 & 3**
**D-8000 München 90(DE)**

(54) **Gear transmission with variable pressure angle and method of machining gear tooth profiles with a variable pressure angle.**

(57) The gear transmission has a meshing geometry with the following parameters: contact ratio greater than one, height $(h_g)$ of addendum (1) of pinion (2) being a function of its module "m" determined by the following relationship: $m < h_g < 1.8\ m$, height $(h_s)$ of tooth root (1) of the pinion (2) being limited by the value of profile angle $(\alpha_z)$, equal to: $\alpha_z \geq 8°$, height $(H_s)$ of tooth root (5) of the gear wheel (6) determined by the relationship $m < H_s < 1.8\ m$ increased by the value of the radial clearance $(l_p)$, whereas the height $(H_g)$ of the addendum (5) of the gear wheel (6) is equal to the height of the root $(h_s)$ of the tooth (1) of the pinion (2) decreased by the value of the radial clearance $(l_p)$.

Such a variable pressure angle in a gear trans-

mission with cylindrical gear wheels, with straight and oblique teeth, as well as in worm gears leads in effect to a considerable reduction of contact stresses which are several or ten times smaller, to reduced tooth slips, and to the more favourable lubricating conditions.

Fig. 1

# Gear Transmission With Variable Pressure Angle and Method of Machining Gear Tooth Profiles With a Variable Pressure Angle

This invention relates to gear transmissions with variable pressure angles and method of machining gear tooth profiles with variable pressure angles.

Those skilled in art know involute gear transmissions with convex and concave tooth profiles featured with a constant pressure angle being the result of unwinding involute from a constant base circle. Constant pressure angle determines strictly the geometry of meshing and the geometry of teeth of intermating gear wheels.

A drawback of the above mentioned transmissions is an extremely unfavourable geometry of meshing of the intermating gear wheels leading to appearance of considerable contact stresses as a result of the fact that teeth of the intermating wheels enter into contact with each other at the points of convexities.

In order to increase the load capacity of the meshing subjected to special heat-chemical treatment high-grade steels are used because of the existing considerable surface pressures, said gear wheel teeth being specially finished which raises considerably the costs of production of the gear transmission.

Another known design improving the meshing of the gear wheel teeth, such as e.g. gear transmission according to the Polish Patent Specification no. 76,184, gear transmission made by Vickers, or the Wildhaber's or Novikiv's meshing have not found wider use. Both the gear transmission according to the Polish Patent Specification no. 76,184, whose wheels have low teeth with involute concave and convex profiles, as well as the Vickers' gear transmission have the teeth profiles of the pinion and the gear wheel made by means of racks having constant inclination angle of cutting edges equal usually to 20 degrees. Teeth profiles of the gear wheel and the pinion are obtained by the necessary correction (shifting of profile), negative for tooth with a negative curvature and positive for tooth with a positive curvature. Moreover, in the gear transmission according to the Polish Patent Specification no. 76,184 the pinion addendum diameter is equal to the generating diameter, the latter being, in turn, equal to the pitch diameter. As a result, the tooth addendum height coefficient is equal to zero and the teeth of the toothed wheel with a negative curvature have the addendum coefficient of almost one, whereas the tooth root height is equal to the radial clearance. In the case of meshing of cylindrical gears with straight teeth the tooth contact ratio is smaller than one, which entails a serious limitation of the scope of application of the gear wheels with oblique teeth. In turn, the Wildhaber or Novikov's gear wheels with circular arced profiles enable unit tooth pressures to be decreased, but they have other serious drawback consisting in that they are very sensitive to an accurate setting of the axial distance and that the bending strength of teeth is very small.

The aim of the present invention is elimination of the above mentioned drawbacks of the known gear transmission so far used.

The aim accoding to the invention has been accomplished due to application of a gear transmission whose meshing geometry has the following parameters: contact ratio greater than one, addendum of pinion teeth being a function of its module being greater than that module, but not exceeding 1,8 of that module, pinion tooth root being limited by the pressure angle whose value must not be smaller than 8 degrees, gear wheel tooth root height being a function of its module being greater than that module, but not exceeding 1,8 of that module, said heigth being increased by the value of the radial clearance, said addendum of the gear wheel being equal to the height of the tooth root of the pinion.

The nature of the method of machining tooth profile of a gear transmission with a variable pressure angle according to the invention consists in that for obtaining appropriate shaping the tooth profiles of the pinion and the gear wheel special racks with an involute cutting edge profile and a constant base circle thereof are used, said base circle being determined from the apparent number of teeth and a constant pressure angle of said racks, said racks being placed in such a position relative to the pinion and gear wheel to be machined as to obtain a pressure angle of the generating circles intermated with each other on the generating circles equal to the sum or difference of a constant pressure angle of machining racks and the angle of rotation of a constant pressure angle of the machining racks around the axis of said racks.

Advantageous effects obtainable due to the design according to this invention as compared with the other designs so far known are as follows: considerable reduction of contact stresses (several to several score times), reduction of slippage of teeth and thus smaller losses of energy being transmitted, as well as better lubrication. Owing to a variable pressure angle, variable base circle, from which involute is unwound, and a contact ratio smaller than one, the meshing geometry according to the invention can be applied in cylindrical gear wheels with straight and oblique teeth, in bevel gears with straight and oblique teeth, as well as in worm gears. Considerable reduction of contact pressures enables overall dimensions of the toothed wheels and gear transmissions to be diminished.

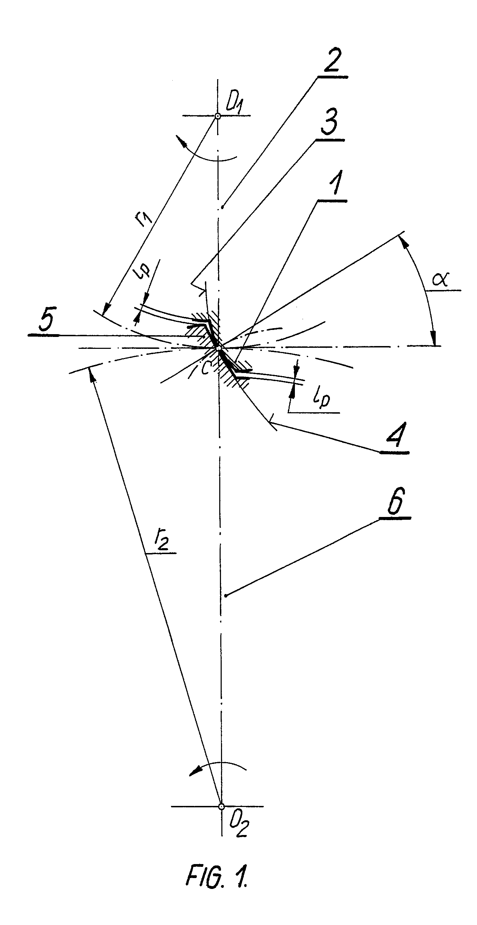

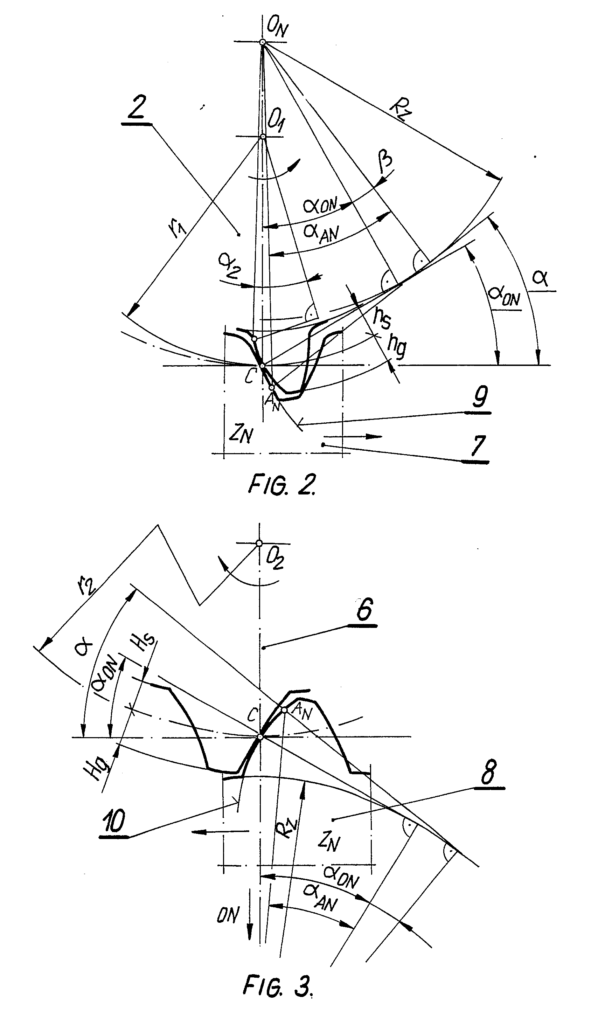

The subject of the invention has been presented on an example of embodiment shown in the accompanying drawing, wherein Fig. 1 presents the normal section of a part of a gear transmission with a variable pressure angle, Fig.2 visualizes the normal section of a fragment of a pinion of that transmission and the rack when the pinion teeth profiles are being shaped, Fig. 3 shows the normal section of a fragment of toothed wheel of that gear transmission and the rack during the shaping of the teeth profiles of that wheel.

As may be seen in the figures, the teeth 1 of the pinion 2 having an involute shape with a positive curvature 3 are intermated with the profile 4 with a negative curvature of the tooth 5 of the gear wheel 6. Cutting edges of the racks of the pinion 7 and toothed wheel 8 have a shape of an involute unwound from the base circle $R_z$ determined by the apparent number of teeth $Z_n$ and a constant pressure angle of said racks of $\alpha_{ON}°$. During wheel generation of the teeth profiles 1, profile 9 and the cutting edge of the rack 7 generates the positive curvature 3, whereas profile 10 of the cutting edge 8 generates the negative curvature 4. Involute shape of cutting edges of the racks 7 and 8 ensures a variable pressure angle $\alpha$ of the meshed teeth 1 and 5 of the pinion 2 and the toothed wheel 6 during machining. In turn, variable pressure angle during machining teeth 1 and 5 leeds to variable base circles, from which involute profiles 3 of the tooth 1 and the pinion 2, as well as profiles 4 of the tooth 5 and the pinion 6 are being unwound. Profiles of teeth 1 of the pinion 2 and the teeth 5 of the gear wheel 6 are shaped by means of racks with an involute profile of their cutting edges and a constant base circle $R_z$ thereof as determined by the apparent number of teeth $Z_n$ and a constant pressure angle $\alpha_{ON}$, said racks being set in such a position relative to the pinion 2 and gear wheel 6 to be machined as to obtain the pressure angle $\alpha$ on the generating circles $r_1$ and $r_2$ according to the following relationship:

$$\alpha = \alpha_{ON} + \beta$$

$$\beta = \frac{180}{\pi} (tg\alpha_{AN} - tg\alpha_{ON})$$

where:
$\alpha$ -pressure angle of the intermating generating circles $r_1$ and $r_2$
$\alpha_{ON}$ -constant pressure angle of machining racks
$\beta$ -angle of rotation of the pressure angle $\alpha_{ON}$ around ON axis of machining racks
$\alpha_{AN}$ -angle of profile of involute cutting edges.

As a result of machining the tooth profiles of the gear transmissions using the method according to this invention the meshing geometry with the following parameters has been obtained:
-contact ratios: 1.25, 1.3, 1.5,
-addendum $h_g$ of tooth 1 expressed in terms of the tooth module equal to: 1.3 m, 1.5 m, 1.6 m,
-height $h_s$ of tooth root 1 expressed limited by the profile angle $\alpha_z$ equal to 8 degrees, 10 degrees, 15 degrees,
-height $H_s$ of tooth root 5 equal to 1.5 mm, 1.7 mm and 1.8 mm increased by the amount of the radial clearance $l_p = 0.2$ mm,
-addendum $H_g$ of the tooth 5 equal to the root height $h_s$ of tooth 1 of the pinion 2 decreased by the amount of the radial clearance $l_p = 0.2$ mm.

According to the invention the pressure angle $\alpha$ is minimum at the addendum of the tooth 5 of the gear wheel 6 and maximum at the root of the tooth 5. In the case of a tooth 1 of the pinion 2 the pressure angle $\alpha$ is maximum at the addendum or head of the tooth 1 and minimum at the root of the tooth 1.

## Claims

1. Gear transmission with a variable pressure angle, whose teeth have an involute profile with a negative and positive curvature characterized by that its meshing geometry has the following parameters: contact ratio greater than one, height ($h_g$) of the addendum of the tooth (1) of the pinion (2) being a function of its module "m" determined by the following relationship: $M < h_g < 1.8$ m, height $h_s$ of the tooth root (1) of the pinion (2) limited by the profile angle ($\alpha_z$) equal to: $\alpha_z \geq 8$ degrees, height ($H_s$) of the tooth root (5) of the gear wheel (6) determined by the following relationship: $m < H_s < 1.8$ m increased by the amount of the radial clearance ($l_p$), and height ($H_g$) of the addendum of the tooth (5) of the gear wheel (6) equal to the height of the root ($h_s$) of the tooth (1) of the pinion (2) decreased by the amount of the radial clearance ($l_p$)

2. Method of generation of the tooth profiles of gear transmissions with a variable pressure angle and with concave and convex tooth profiles by means of cutting racks characterized by that for shaping the profiles of teeth (1) of the pinion (2) and teeth (5) of the gear wheel (6) special racks with an involute profile of their cutting edges and constant base circle ($R_z$) are used said base circle being determined from the apparent number of teeth ($Z_n$) and a constant pressure angle ($\alpha_{ON}$), said racks being set in such a position relative to the pinion (2) to be machined as to obtain a pressure angle ($\alpha$) on the generating wheels ($r_1$ and $r_2$) determined by the relationship given below:

$$\alpha = \alpha_{ON} + \beta$$

$$\beta = \frac{180}{\pi} \, (tg\alpha_{AN} - tg\alpha_{ON})$$

where:
$\alpha$ -pressure angle of the intermediate base circles
$\alpha_{ON}$ -constant pressure angle of the machining racks
$\beta$ -angle of rotation of the constant pressure angle $\alpha_{ON}$ around axis ON of the machining racks
$\alpha_{AN}$ -angle of involute profile of cutting edges.

FIG. 1.

FIG. 2.

FIG. 3.